# EUROPÄISCHE PATENTSCHRIFT

(11) **EP 2 750 267 B1**
(45) Veröffentlichungstag und Bekanntmachung des Hinweises auf die Patenterteilung: **24.01.2018**
(21) Anmeldenummer: 12199517.9
(22) Anmeldetag: 27.12.2012
(51) Int. Cl.: H02K 5/22, H02K 11/00

(54) **Pumpenaggregat**
Pump power unit
Groupe motopompe

(43) Veröffentlichungstag der Anmeldung: 02.07.2014
(73) Patentinhaber: Grundfos Holding A/S, 8850 Bjerringbro (DK)
(72) Erfinder: Blad, Thomas, 8850 Bjerringbro (DK)
(74) Vertreter: Patentanwälte Vollmann & Hemmer

(56) Entgegenhaltungen:
- EP-A1- 1 947 347
- EP-A1- 2 500 577
- EP-A2- 0 735 622
- DE-A1- 4 411 960
- DE-A1- 19 851 455
- DE-A1-102005 059 941

## Beschreibung

Die Erfindung betrifft ein Pumpenaggregat mit den im Oberbegriff des Anspruchs 1 angegebenen Merkmalen.

Pumpenaggregate, wie beispielsweise Heizungsumwälzpumpenaggregate, bilden in der Regel eine Baueinheit aus einem elektrischen Antriebsmotor und einer Pumpe, beispielsweise einer Kreiselpumpe. Der elektrische Antriebsmotor ist in einem Motor- oder Statorgehäuse angeordnet, welches mit der eigentlichen Pumpe, d. h. einem Pumpengehäuse verbunden ist. Die zur Steuerung bzw. Regelung des elektrischen Antriebsmotors erforderlichen elektrischen und elektronischen Bauteile sind in der Regel in einem Klemmenkasten bzw. Elektronikgehäuse angeordnet, welches mit dem Statorgehäuse verbunden ist.

Sowohl zum Anschluss der Spulen im Statorgehäuse als auch zur Verbindung einer Netzanschlussleitung und ggf. zum Anschluss weiter elektronischer Bauteile ist es erforderlich, an dem Elektronikgehäuse Anschlusssteckkontakte oder Kabeldurchführungen auszubilden. Dazu ist es bekannt, elektrische Leiterbahnen in das Kunststoffmaterial, aus welchem das Elektronikgehäuse gefertigt ist, einzugießen, was jedoch den Gussvorgang des Elektronikgehäuses kompliziert macht. Alternativ ist es möglich, in dem Gehäuse Kabeldurchführungen vorzusehen, durch welche Kabel geführt und diese dann im Inneren mit einer Leiterplatte, an welcher die elektronischen Bauelemente angeordnet sind, zu verbinden. Dies wiederum erfordert eine aufwendige und fehleranfällige Montage. Darüber hinaus ist es problematisch, die Kabel in den Kabeldurchführungen abzudichten.

DE 44 11 960 A1 offenbart einen Elektromotor mit einem Gehäuse, in welchem eine Leiterplatte angeordnet ist. Das Gehäuse ist rohrförmig ausgebildet und an einer Stirnseite durch einen Steckerdeckel verschlossen, in welchem an der Innenseite ein Anschlussstecker zum Kontaktieren der Leiterplatte und an welchem an der Außenseite ein Anschlussstecker zur Verbindung mit einer Anschlussleitung angeordnet ist. Der elektrische Anschluss ist somit in die von dem Steckerdeckel gebildete Gehäusewandung des Motorgehäuses integriert und bildet somit einen Teil des die Elektronik beherbergenden Gehäuses.

EP 1 947 347 A1 offenbart ein Pumpenaggregat mit einem Elektronikgehäuse aus Kunststoff, wobei elektrische Leiter, welche ein Anschlusselement bilden, in die Gehäusewandung des Elektronikgehäuses eingegossen sind.

DE 198 51 455 A1 offenbart ebenfalls ein Elektronikgehäuse mit in eine Gehäusewandung eingegossenen elektrischen Anschlusskontakten.

DE 10 2005 059941 A1 offenbart den Oberbegriff des Anspruchs 1. Im Hinblick auf die genannte Problematik ist es Aufgabe der Erfindung, ein Pumpenaggregat dahingehend zu verbessern, dass externe elektrische oder elektronische Bauteile auf vereinfachte Weise sicher mit einer Leiterplatte im Inneren eine Elektronikgehäuses des Pumpenaggregates verbunden werden können.

Diese Aufgabe wird durch ein Pumpenaggregat mit den in Anspruch 1 angegebenen Merkmalen gelöst. Bevorzugte Ausführungsformen ergeben sich aus den Unteransprüchen, der nachfolgenden Beschreibung sowie den beigefügten Zeichnungen.

Das erfindungsgemäße Pumpenaggregat weist in bekannter Weise ein Motor- bzw. Statorgehäuse auf, in welchem der elektrische Antriebsmotor des Pumpenaggregates, d. h. insbesondere der Stator mit seinen Spulen und dem darin rotierenden Rotor angeordnet ist. Mit dem Statorgehäuse kann in bekannter Weise ein Pumpengehäuse verbunden sein, in welchem bevorzugt zumindest ein Laufrad angeordnet ist, welches durch den elektrischen Antriebsmotor drehend angetrieben wird. Die zur Steuerung bzw. Regelung des Antriebsmotors erforderlichen elektronischen Bauteile sind an zumindest einer Leiterplatte angeordnet, welche in einem Klemmenkasten, bzw. Elektronikgehäuse angeordnet ist. Dieses Elektronikgehäuse ist mit dem Statorgehäuse verbunden. Dabei kann es axial- oder radialseitig an das Statorgehäuse angesetzt sein.

Erfindungsgemäß ist in oder an dem Elektronikgehäuse zumindest ein separates Stator- Anschlusselement angeordnet. Dieses Stator- Anschlusselement dient dazu, die Leiterplatte elektrisch mit außerhalb des Elektronikgehäuses gelegenen Spulen im Statorgehäuse zu verbinden. Das separate Stator-Anschlusselement ist als Kunststoffformteil ausgebildet und mit der übrigen Struktur des Elektronikgehäuses vorzugsweise kraft- und/oder formschlüssig, ggf. durch zusätzliche Befestigungselemente wie Schrauben verbunden. D. h. das Anschlusselement ist ein von dem Elektronikgehäuse unabhängiges Bauteil.

Das Anschlusselement weist eine erste elektrische Verbindung auf, über welche das Anschlusselement mit der Leiterplatte bzw. auf der Leiterplatte angeordneten Leiterbahnen elektrisch leitend verbunden ist. Ferner weist das Anschlusselement eine zweite elektrische Verbindung in Form eines elektrischen Steckverbinders auf, welcher mit der ersten elektrischen Verbindung über Leiterbahnen verbunden ist. Diese Leiterbahnen sind besonders bevorzugt in den Kunststoff des Anschlusselementes eingegossen. Der Steckverbinder der zweiten elektrischen Verbindung dient dazu, einen elektrischen Anschluss zu einem außerhalb des Elektronikgehäuses gelegenen Bauteil herzustellen. Das Anschlusselement weist eine eigenstabile Struktur auf und hat daher im Unterschied zu einem Kabel eine definierte Form und Lage in oder an dem Elektronikgehäuse.

Durch das zusätzliche Anschlusselement ist es nicht mehr erforderlich, Leiterbahnen in das Elektronikgehäuse bzw. dessen Wandung selber einzugießen. So ist erfindungsgemäß das Elektronikgehäuse frei von solch eingegossenen Leiterbahnen. Dennoch ist eine einfache elektrische Verbindung möglich. Durch die eigenstabile Ausgestaltung des Anschlusselementes ist dieses leicht zu platzieren und zu montieren, es muss nicht wie bei Kabeln auf die genaue Lage geachtet werden, um beispielsweise zu verhindern, dass Kabel unbeabsichtigt eingeklemmt werden. Das Anschlusselement ermöglicht eine einfache Anbindung außerhalb des Elektronikgehäuses gelegener Bauteile, welche einfach an der Steckverbindung der zweiten elektrischen Verbindung angesteckt werden können. So kann beispielsweise eine einfache Steckverbindung zwischen dem Elektronikgehäuse und dem Statorgehäuse hergestellt werden. Dabei ist von Vorteil, dass die externen Bauteile nicht direkt mit Steckkontakten an der Leiterplatte in Eingriff treten. Dies hat zum einen den Vorteil, dass die Leiterplatte nicht unbedingt so platziert werden muss, dass sie von der Außenseite des Elektronikgehäuses direkt kontaktierbar ist. So ergeben sich mehr Freiheiten bei der Gestaltung des Elektronikgehäuses und der Anordnung der Leiterplatte in dessen Inneren. Zum anderen ist von Vorteil, dass beim Anschluss externer Bauteile eben nicht Steckkontakte an der Leiterplatte kontaktiert werden müssen, sodass eine versehentliche Beschädigung der Leiterplatte bei unsachgemäßer Handhabung verhindert werden kann. Darüber hinaus ist eine bessere Abdichtung des Elektronikgehäuses nach außen möglich, da eine solche gegenüber dem formstabilen zusätzlichen Anschlusselement vorgenommen werden kann, welches als Kunststoffformteil so ausgebildet sein kann, dass es gut abgedichtet durch eine Öffnung in der Wandung des Elektronikgehäuses hindurchgeführt oder an einer solchen Öffnung abgedichtet platziert werden kann.

Der elektrische Steckverbinder der zweiten elektrischen Verbindung kann als männlicher oder weiblicher Teil einer Steckverbindung ausgebildet sein.

Weiter bevorzugt weist die erste elektrische Verbindung einen ersten elektrischen Steckverbinder auf, welcher mit einer korrespondierenden elektrischen Steckkupplung an der Leiterplatte verbunden ist, und mit dem zweiten Steckverbinder der zweiten elektrischen Verbindung über Leiterbahnen verbunden ist. Dieser erste elektrische Steckverbinder ermöglicht eine leichte steckbare, vorzugsweise lösbare Verbindung zwischen dem Anschlusselement und der Leiterplatte, wodurch die Montage vereinfacht wird. Die Leiterbahnen sind vorzugsweise in den Kunststoff, aus welchem das Anschlusselement geformt ist, eingegossen oder fest an der Oberfläche des Kunststoffes angeordnet. Auch der erste elektrische Steckverbinder kann als männlicher oder weiblicher Teil einer Steckverbindung ausgebildet sein, die Steckkupplung ist korrespondierend somit entweder als weiblicher oder männlicher Teil der Steckverbindung ausgebildet.

Vorzugsweise ist der erste elektrische Steckverbinder entgegengesetzt zu dem zweiten elektrischen Steckverbinder gerichtet. So ist es möglich, die Leiterplatte an der ersten Seite des Anschlusselementes anzuordnen, während das zu kontaktierende elektrische Bauteil, beispielsweise ein Stator in dem Statorgehäuse an der entgegengesetzten Seite gelegen ist.

Ferner können der erste Steckverbinder und der zweite Steckverbinder in einer Richtung quer zu ihren Steckrichtung versetzt zueinander angeordnet sein, während die Steckrichtungen vorzugsweise parallel zueinander gerichtet sind. Dies ermöglicht es, dass das zu kontaktierende elektrische Bauteil, wie beispielsweise der elektrische Anschluss der Statorspulen im Inneren des Statorgehäuses an einer Position kontaktiert werden können, welche nicht direkt von der Leiterplatte überdeckt ist. So muss die Leiterplatte nicht so angeordnet werden, dass sie den zu kontaktierenden elektrischen Anschlüssen, beispielsweise der Statorspulen gegenüberliegt. Vielmehr kann das Anschlusselement eine Verbindung herstellen, welche eine versetzte Anordnung der zu kontaktierenden Anschlüsse zu den korrespondierenden Anschlüssen an der Leiterplatte ermöglicht. Anstatt eines ersten Steckverbinders kann auch bei dieser Ausführungsform eine andere geeignete elektrische Verbindung gewählt sein, beispielsweise können an dem Anschlusselement elektrische Verbindungselemente ausgebildet sein, welche mit korrespondierenden Anschlüssen an der Leiterplatte verlötet sind.

Weiter bevorzugt weist das Anschlusselement einen Abschnitt auf, welcher sich in einer Ebene parallel zu der Leiterplatte erstreckt, wobei sich der elektrische Steckverbinder der zweiten elektrischen Verbindung vorzugsweise quer, insbesondere normal zu dieser Ebene erstreckt. D. h. die Steckrichtung des elektrischen Steckverbinders der zweiten elektrischen Verbindung ist quer zur Ebene der Leiterplatte gerichtet. Die flache Ausgestaltung des Anschlusselementes parallel zu der Leiterplatte kann dabei die Bauhöhe der gesamten Anordnung gering halten.

Das Anschlusselement ist in dem Elektronikgehäuse oder an dem Elektronikgehäuse weiter bevorzugt mittels einer Schraub- oder Rastverbindung fixiert. Dies kann insbesondere eine lösbare Verbindung sein, sodass das Anschlusselement zu Reparatur- oder Wartungszwecken wieder gelöst werden kann.

Wie oben ausgeführt, sind die Leiterbahnen, welche die elektrischen Verbindungen bzw. Anschlüsse an dem Anschlusselement verbinden, vorzugsweise in dem Kunststoff, aus welchem das Anschlusselement geformt ist, eingegossen. Dies ermöglicht eine einfache Fertigung und Montage. Darüber hinaus kann der Kunststoff zur elektrischen Isolation dienen.

Erfindungsgemäß ist das Anschlusselement als ein in dem Elektronikgehäuse gelegenes Stator-Anschlusselement ausgebildet, welches über eine erste elektrische Verbindung, vorzugsweise einen ersten elektrischen Steckverbinder mit der Leiterplatte bzw. mit an der Leiterplatte ausgebildeten Leiterbahnen verbunden ist, sowie einen zweiten elektrischen Steckverbinder aufweist, welcher mit der ersten elektrischen Verbindung über Leiterbahnen verbunden ist und mit einem Anschlussstecker eines Stators des elektrischen Antriebsmotors verbunden ist. Diese Anordnung ermöglicht die elektrische Verbindung zwischen den elektronischen Bauteilen in dem Elektronikgehäuse und dem Stator in dem Statorgehäuse allein durch Steckverbindungen herzustellen. So kann das Elektronikgehäuse sehr einfach mit dem Statorgehäuse verbunden werden, ohne dass eine aufwendige Verdrahtung der elektrischen Anschlüsse erforderlich wäre. Das Anschlusselement kann mit den Leiterbindung oder aber in anderer geeigneter Weise elektrisch leitend verbunden sein, beispielsweise verlötet sein.

Der zweite elektrische Steckverbinder erstreckt sich vorzugsweise durch eine Öffnung in einer Wandung, vorzugsweise im Boden des Elektronikgehäuses aus diesem heraus zu dem Stator. Dabei kann sich der zweite elektrische Steckverbinder soweit aus dem Elektronikgehäuse heraus erstrecken, dass er durch eine Öffnung in das Innere des Statorgehäuses eingreifen kann und dort einen Anschlussstecker des Stators kontaktieren kann. Dabei kann der zweite elektrische Steckverbinder entweder als weiblicher oder als männlicher Teil der Steckverbindung ausgebildet und der Anschlussstecker entsprechend korrespondierend als männlicher oder weiblicher Teil der Steckverbindung gestaltet sein. Alternativ wäre es auch denkbar, den zweiten elektrischen Steckverbinder im Inneren des Statorgehäuses anzuordnen und den Anschlussstecker im Statorgehäuse so auszubilden, dass er sich aus dem Statorgehäuse heraus in das Innere des Elektronikgehäuses hinein erstreckt. Die Ausgestaltung, bei welcher der zweite Steckverbinder sich aus dem Elektronikgehäuse heraus erstreckt, hat den Vorteil, dass eine gute Abdichtung zwischen dem Anschlusselement und der die Öffnung umgebenden Wandung unabhängig von der Anordnung des Elektronikgehäuses an dem Statorgehäuse realisiert werden kann.

Gemäß der Erfindung weist das Stator-Anschlusselement eine Erdungsverbindung auf, welche mit einem ersten Erdungsanschluss versehen ist, welcher mit einem Erdungskontakt an dem Statorgehäuse verbunden ist. So kann eine Erdungsverbindung zwischen dem Statorgehäuse und Erdungsleitern im Inneren des Elektronikgehäuses, insbesondere an der Leiterplatte mit Hilfe des Stator-Anschlusselementes realisiert werden.

Der erste Erdungsanschluss ist weiter bevorzugt als eine elektrisch leitfähige Aufnahme ausgebildet, in welche ein an dem Statorgehäuse angeordneter elektrisch leitfähiger Stift eingreift. Der Stift steht vorzugsweise von dem Statorgehäuse in der Fügerichtung, in welcher das Elektronikgehäuse an das Statorgehäuse gefügt wird, vor. So kann beim Ansetzen des Elektronikgehäuses der Stift in die elektrisch leitfähige Aufnahme eingreifen und die Erdungsverbindung hergestellt werden. Die elektrisch leitfähige Aufnahme kann dabei durch Klemm- oder Schneidkontakte gebildet sein, welche elektrisch leitend mit dem Stift in Eingriff treten.

Die Erdungsverbindung ist vorzugsweise mit einem zweiten Erdungsanschluss versehen, welcher elektrisch leitend mit einem Erdungskontakt an der Leiterplatte verbunden ist. Bei dieser Ausgestaltung wird die Erdungsverbindung von einer Netzanschlussleitung vorzugsweise über die Leiterplatte geführt. Dies hat den Vorteil, dass keine separate Erdungsleiter im Elektronikgehäuse angeordnet werden müssen. Dies ist insbesondere dann von Vorteil, wenn das Elektronikgehäuse frei von in das Elektronikgehäuse integrierten, insbesondere in die Wandung des Elektronikgehäuses eingegossenen elektrischen Leitern sein soll. Bei dem erfindungsgemäßen Elektronikgehäuse sind vorzugsweise keine solchen in die Wandungen des Elektronikgehäuses integrierten Leiter vorgesehen.

Weiter bevorzugt weist die Erdungsverbindung an dem Stator-Anschlusselement einen Erdungsanschluss auf, welcher mit zumindest einem Wärmeverteiler elektrisch leitend und vorzugsweise wärmeleitend verbunden ist. Wärmeverteiler werden üblicherweise aus Metall ausgebildet, um die gewünschte hohe Wärmeleitfähigkeit zu gewährleisten. Ferner sind die Wärmeverteiler meist an der Außenseite des Elektronikgehäuses frei zugänglich angeordnet, sodass eine Erdung erforderlich ist. Durch Verbindung mit der Erdungsverbindung an dem Stator-Anschlusselement wird somit auf sehr einfache Weise die Erdung des zumindest einen Wärmeverteilers realisiert.

Bevorzugt ist der Wärmeverteiler mit der Erdungsverbindung nicht nur elektrisch, sondern auch wärmeleitend verbunden. Dies ist von Vorteil, wenn die Erdungsverbindung gleichzeitig mit einem Erdungsanschluss des Statorgehäuses verbunden ist. Wenn das Pumpenaggregat ein kaltes Medium, beispielsweise kaltes Wasser fördert, welches eine Temperatur aufweist, welche geringer als die Umgebungstemperatur ist, kühlt sich das Statorgehäuse ab. Über die Verbindung zu dem Erdungskontakt des Statorgehäuses würde sich somit auch die Erdungsverbindung im Inneren des Elektronikgehäuses möglicherweise abkühlen, was dazu führen könnte, dass Feuchtigkeit im Inneren des Elektronikgehäuses an dieser Erdungsverbindung kondensiert. Durch die wärmeleitende Verbindung mit dem Wärmeverteiler wird dies verhindert, da so über den Wärmeverteiler die Erdungsverbindung im Inneren des Elektronikgehäuses erwärmt wird und so eine Kondensation von Feuchtigkeit verhindert werden kann. Die wärmeleitende Verbindung ist vorzugsweise so ausgebildet, dass der Kontakt zwischen der Erdungsverbindung bzw. dem Erdungsanschluss und dem Wärmeverteiler großflächiger ausgebildet wird, als er für die elektrische Verbindung erforderlich wäre. Durch die großflächige Anlage wird ein guter Wärmeübergang erreicht.

Der zweite Erdungsanschluss der Erdungsverbindung ist weiter bevorzugt sowohl mit dem Erdungskontakt an der Leiterplatte als auch mit dem Wärmeverteiler, vorzugsweise mittels einer Schraube, elektrisch leitend verbunden. Dies hat den Vorteil, dass die Erdungsverbindung zwischen Wärmeverteiler, Stator-Anschlusselement und Leiterplatte mit einem Verbindungsvorgang, nämlich bevorzugt durch eine Schraube realisiert werden kann. Ferner kann eine solche Verbindung oder Schraube auch gleichzeitig der mechanischen Fixierung des Anschlusselementes im Inneren des Elektronikgehäuses dienen.

Der zweite Erdungsanschluss ist vorzugsweise als metallische Öse an einer, vorzugsweise in das Stator-Anschlusselement eingegossenen, Leiterbahn ausgebildet. Eine solche Öse kann von einer Schraube durchgriffen und von dem Schraubenkopf elektrisch leitend kontaktiert werden. Dabei können ggf. Unterlegscheiben oder ähnliches zwischengelegt sein.

Gemäß einer weiteren bevorzugten Ausführungsform ist der Erdungskontakt an der Leiterplatte auf einem zungenförmigen Abschnitt der Leiterplatte ausgebildet. Dieser zungenförmige Abschnitt ist dabei so ausgebildet, dass er eine gewisse Beweglichkeit bzw. Federwirkung zulässt. So kann sich dieser Abschnitt um ein gewisses Maß, vorzugsweise elastisch verformen, wenn der Erdungskontakt mit dem Erdungsanschluss an dem Stator-Anschlusselement verbunden wird. So wird verhindert, dass mechanische Spannungen in die übrigen Teile der Leiterplatte eingebracht werden, welche im Extremfall zu einem Brechen oder Reißen der Leiterplatte und dadurch zu einer Beschädigung elektronischer Bauteile oder Leiterbahnen an der Leiterplatte führen könnten.

Gemäß einer weiteren bevorzugten Ausführungsform kann als ein weiteres separates Anschlusselement ein Netz-Anschlusselement vorgesehen sein. Dabei kann ein solches Netz-Anschlusselement zusätzlich zu dem Stator-Anschlusselement vorhanden sein. Dieses Netz-Anschlusselement ist vorzugsweise außerhalb des Innenraumes des Elektronikgehäuses angeordnet und über eine erste elektrische Verbindung mit der Leiterplatte verbunden und weist eine zweite elektrische Verbindung in Form eines elektrischen Steckverbinders auf, welcher mit der ersten elektrischen Verbindung über Leiterbahnen verbunden ist und zum Anschluss einer Netzanschlussleitung vorgesehen ist. Die Leiterbahnen sind vorzugsweise in das Kunststoffmaterial, aus welchem
das Netz-Anschlusselement ausgebildet ist, eingegossen. Das separate Netz-Anschlusselement ist ebenfalls ein Bauteil, welches unabhängig von dem Elektronikgehäuse gefertigt ist und mit diesem in geeigneter Weise montiert wird. Dabei ist es vorzugsweise eigenstabil aus Kunststoff ausgebildet, sodass es im Unterschied zu einem Kabel eine definierte Form und Lage hat. Das Netz-Anschlusselement dient dem Netzanschluss der elektronischen bzw. elektrischen Komponenten im Inneren des Elektronikgehäuses und somit vorzugsweise der Stromversorgung des gesamten Pumpenaggregates. Der zweite Steckverbinder kann als männlicher oder weiblicher Teil einer Steckverbindung ausgebildet sein. Z. B. kann der zweite Steckverbinder eine Steckkupplung bilden, in welche ein Anschlussstecker einer Netzanschlussleitung eingesteckt werden kann. So ist ein einfacher Netzanschluss des Pumpenaggregates ohne ein aufwendiges Anschrauben oder Anklemmen einzelner Leiter möglich.

Ein solches Netz-Anschlusselement ist vorzugsweise außerhalb des Innenraumes des Elektronikgehäuses angeordnet. So greift es mit einem Abschnitt, an welchem die erste elektrische Verbindung ausgebildet ist, durch eine Ausnehmung oder Öffnung in einer Wandung des Elektronikgehäuses in dieses ein und ist im Inneren mit elektrischen Anschlüssen einer Leiterplatte elektrisch leitend verbunden. Die Anordnung des Anschlusselementes außerhalb des Elektronikgehäuses hat den Vorteil, dass der zweite elektrische Steckverbinder somit außerhalb des Elektronikgehäuses gelegen ist und dort zum Anschluss der Netzanschlussleitung leicht kontaktiert werden kann. Durch die Anordnung des Netz-Anschlusselementes an der Außenseite kann dabei der erforderliche Durchgang in der Wandung des Elektronikgehäuses einfach abgedichtet werden. Ferner ist die Montage begünstigt, da die Leiterplatte in das Innere des Elektronikgehäuses eingesetzt werden kann und das Netzanschlusselement von einer entgegengesetzten Außenseite her angesetzt und durch eine Ausnehmung oder Öffnung mit der Leiterplatte im Inneren des Elektronikgehäuses kontaktiert werden kann. Dies begünstigt sehr einfache Fügevorgänge.

Besonders bevorzugt ist das Anschlusselement als ein Netz-Anschlusselement ausgebildet, welches einen ersten elektrischen Steckverbinder aufweist, welcher mit einer korrespondierenden Steckkupplung an der Leiterplatte in Eingriff ist, sowie einen zweiten elektrischen Steckverbinder aufweist, welcher mit dem ersten elektrischen Steckverbinder über Leiterbahnen in dem Netzanschlusselement verbunden ist und zum Anschluss einer Netzanschlussleitung vorgesehen ist. Die Leiterbahnen sind dabei, wie bereits beschrieben, vorzugsweise in das Kunststoffmaterial des Anschlusselementes eingegossen. Die Ausgestaltung der ersten elektrischen Verbindung mit der Leiterplatte als Steckverbindung hat den Vorteil, dass auch diese sehr leicht hergestellt und ggf. wieder getrennt werden kann. Es sind keine durch zusätzliche Werkzeuge herzustellende elektrische Verbindungen wie Klemm-, Schraub- oder Lötverbindungen erforderlich. Bei dieser Ausführungsform kann das Netz-Anschlusselement innerhalb oder, wie vorangehend beschrieben, außerhalb des Elektronikgehäuses angeordnet sein mit den sich daraus ergebenden vorangehend beschriebenen Vorteilen.

Weiter bevorzugt weist das Netz-Anschlusselement eine Erdungsverbindung von dem zweiten Steckverbinder zu einem ersten Erdungskontakt an der Leiterplatte auf, welcher vorzugsweise Teil der beschriebenen Steckkupplung ist. Dies ermöglicht, dass von einer Netzanschlussleitung direkt eine Erdungsverbindung mit einem Erdungsleiter an der Leiterplatte hergestellt werden kann. Der Erdungsleiter an der Leiterplatte kann dann, wie vorangehend beschrieben, mit weiteren Bauteilen wie einem Stator-Anschlusselement und/oder einem Wärmeverteiler elektrisch leitend verbunden sein.

Vorzugsweise sind eine Steckrichtung, in welcher der erste elektrische Steckverbinder an dem Stator-Anschlusselement mit der korrespondierenden elektrischen Steckkupplung an der Leiterplatte verbunden wird, sowie eine Steckrichtung, in welcher der erste elektrische Steckverbinder an dem Netzanschlusselement mit der Steckkupplung an der Leiterplatte verbunden wird, zueinander parallel. Dies hat den Vorteil, dass alle Steck- und Fügerichtungen in derselben Richtung sind, wodurch sich die Montage vereinfacht.

Nachfolgend wird die Erfindung beispielhaft anhand der beigefügten Figuren beschrieben. In diesen zeigt:
- Fig. 1: eine Seitenansicht eines erfindungsgemäßen Pumpenaggregates,
- Fig. 2: eine um 90° gedrehte Seitenansicht des Pumpenaggregates gemäß Fig. 1,
- Fig. 3: eine Draufsicht auf das Pumpenaggregat gemäß Figuren 1 und 2,
- Fig. 4: das Elektronikgehäuse des Pumpenaggregates gemäß Figuren 1 - 3 in teilweise explodierter Darstellung,
- Fig. 5: das Elektronikgehäuse gemäß Fig. 4 im geöffneten Zustand,
- Fig. 6: vergrößert den Ausschnitt VI aus Fig. 5,
- Fig. 7: vergrößert den Ausschnitt VII aus Fig. 5,
- Fig. 8: das geöffnete Elektronikgehäuse gemäß Figuren 4 - 7 mit entnommener Leiterplatte,
- Fig. 9: das Elektronikgehäuse gemäß Fig. 8 in explodierter Darstellung,
- Fig. 10: das Elektronikgehäuse gemäß Fig. 5 in explodierter Darstellung,
- Fig. 11: eine Ansicht des Elektronikgehäuses gemäß Fig. 4 - 10 von der Unterseite,
- Fig. 12: eine Schnittansicht des Pumpenaggregates gemäß Figuren 1-3,
- Fig. 13: eine Explosionsansicht des Pumpenaggregates gemäß Fig. 12.

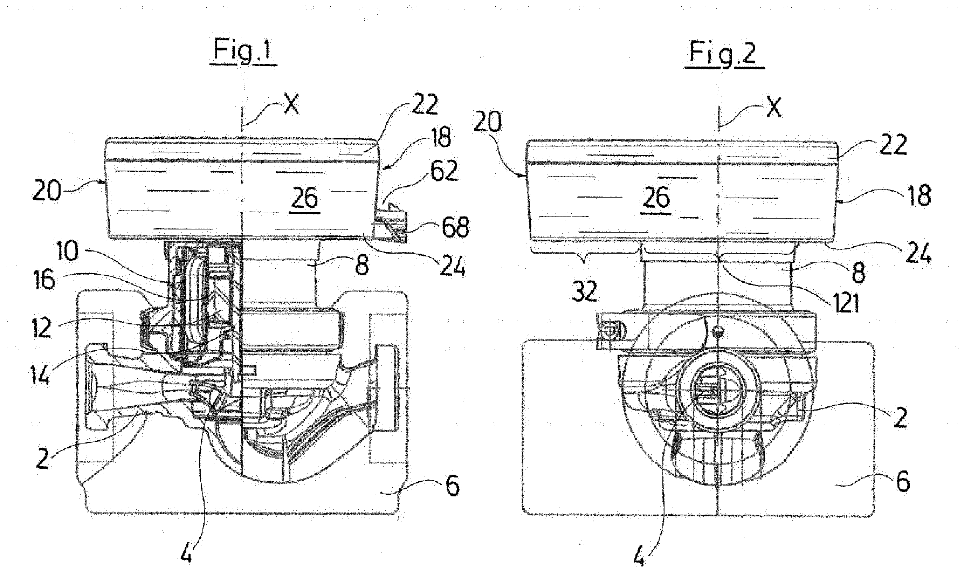

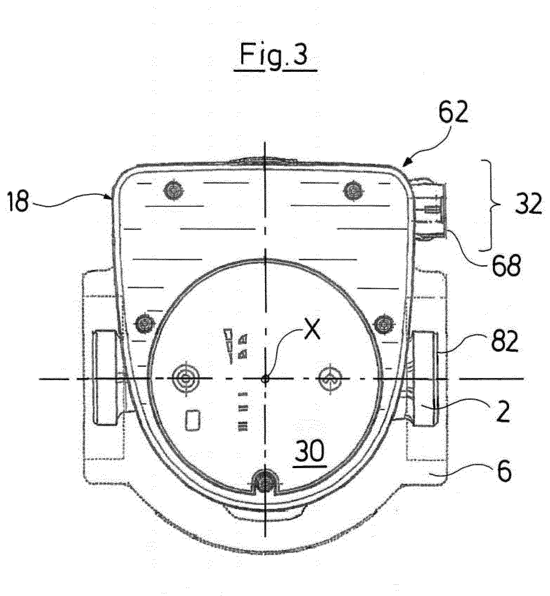

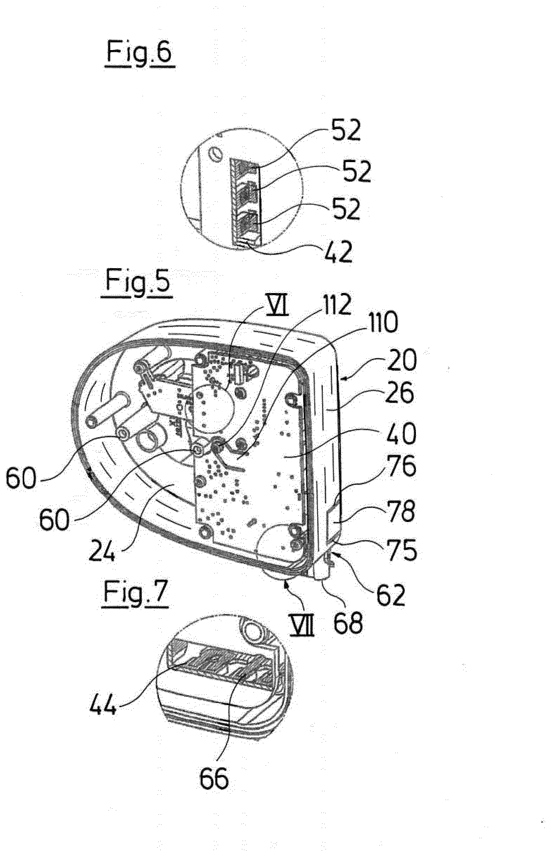

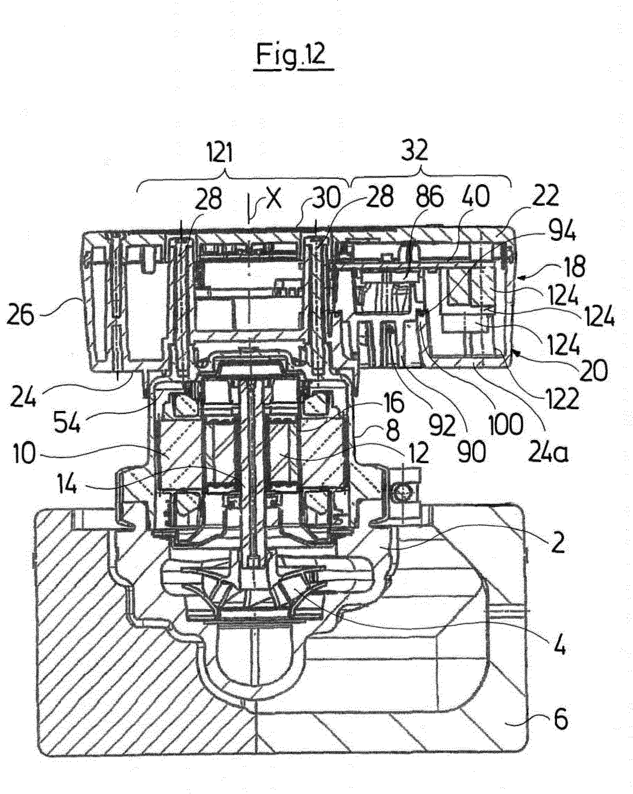

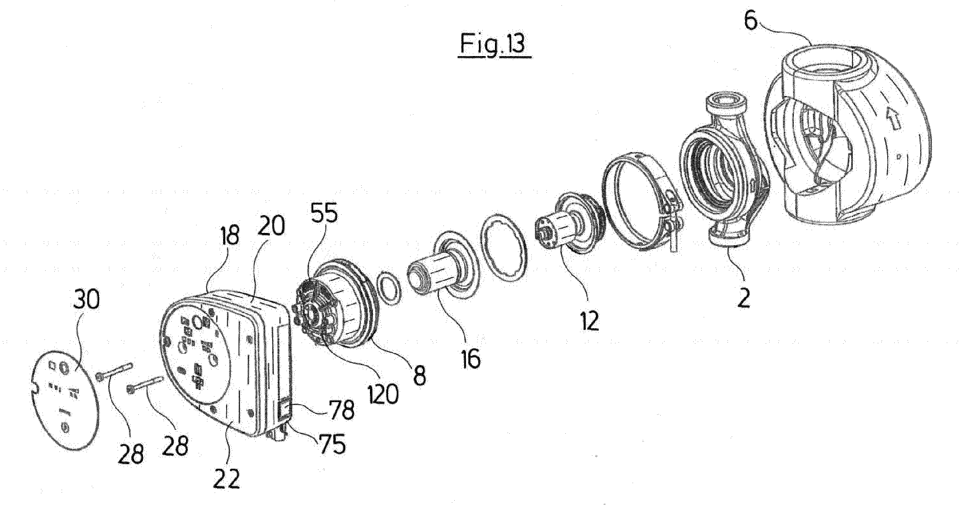

Eine bevorzugte Ausführungsform der Erfindung wird anhand der Figuren 1 - 13 beschrieben. Dabei zeigen die Figuren 1 - 3, 12 und 13 das Pumpenaggregat gemäß dieser bevorzugten Ausführungsform in einer Gesamtansicht. Das Pumpenaggregat weist in bekannter Weise ein Pumpengehäuse 2 auf, in welchem ein Laufrad 4 angeordnet ist. Das Pumpenaggregat ist somit als Kreiselpumpenaggregat ausgebildet. In dem hier gezeigten Beispiel ist das Pumpengehäuse 2 von einem Isolationselement 6 umgeben. Das Pumpengehäuse 2 ist mit einem Motor- bzw. Statorgehäuse 8 verbunden, welches sich in axialer Richtung in Richtung der Längs- bzw. Drehachse X an das Pumpengehäuse 2 anschließt. In dem Statorgehäuse 8 ist der elektrische Antriebsmotor angeordnet, welcher insbesondere einen Stator 10 und einen in diesem drehbaren Rotor 12 aufweist. Der Rotor 12 ist vorzugsweise als permanentmagnetischer Rotor ausbildet. Der Rotor 12 ist über die Rotorwelle 14 drehfest mit dem Laufrad 4 verbunden. Der elektrische Antriebsmotor ist als nasslaufender elektrischer Antriebsmotor ausgebildet, d. h. er weist ein Spaltrohr 16 auf.

An das dem Pumpengehäuse 2 abgewandte Axialende (in Richtung der Längsachse X gesehen), des Statorgehäuses 8 ist an das Statorgehäuse 8 ein Klemmenkasten bzw. Elektronikgehäuse 18 angeordnet. Das Elektronikgehäuse 18 ist als Formteil aus Kunststoff ausgebildet, wobei es zweiteilig ausgebildet ist und ein Unterteil 20 und einen auf das Unterteil 20 aufgesetzten Deckel 22 aufweist. Das Unterteil 20 ist im Wesentlichen topfförmig ausgebildet und weist einen Boden 24 auf, welcher dem Statorgehäuse 8 zugewandt ist. Ausgehend von dem Boden 24 erstreckt sich an dessen Außenumfang eine Außenwandung 26 in axialer Richtung in dem Statorgehäuse 8 abgewandter Richtung. Dabei erstreckt sich die Außenwandung 26 im Wesentlichen in Richtung der Längsachse X. An dem offenen, vom Boden 24 beabstandeten Ende der Außenwandung 26 ist der Deckel 22 zum Verschluss des Elektronikgehäuses angesetzt. Der Boden 24 des Elektronikgehäuses ist mit dem Statorgehäuse 8 über zwei Schrauben 28 verschraubt. An der Außenseite des Deckels 22 ist ein Bedienfeld 30 mit Bedien- und Anzeigeelementen ausgebildet.

Das Elektronikgehäuse 18 weist quer zur Längsachse X ist eine größere Ausdehnung auf als die radiale Ausdehnung des Statorgehäuses 8. So weist das Elektronikgehäuse 18 einen radial bzw. seitlich über den Außenumfang des Statorgehäuses 8 auskragenden Abschnitt 32 auf. Auch in den anderen Richtungen steht das Elektronikgehäuse 18 geringfügig allerdings konzentrisch zur Längsachse X über den Außenumfang des Statorgehäuses 8 in radialer Richtung vor. Zu einer Seite hin steht es jedoch in Form des auskragenden Abschnittes 32 weiter vor. Dieser Bereich ist auch in tangentialer Richtung ausgehend von dem Bereich am Axialende des Statorgehäuses 8 verbreitert.

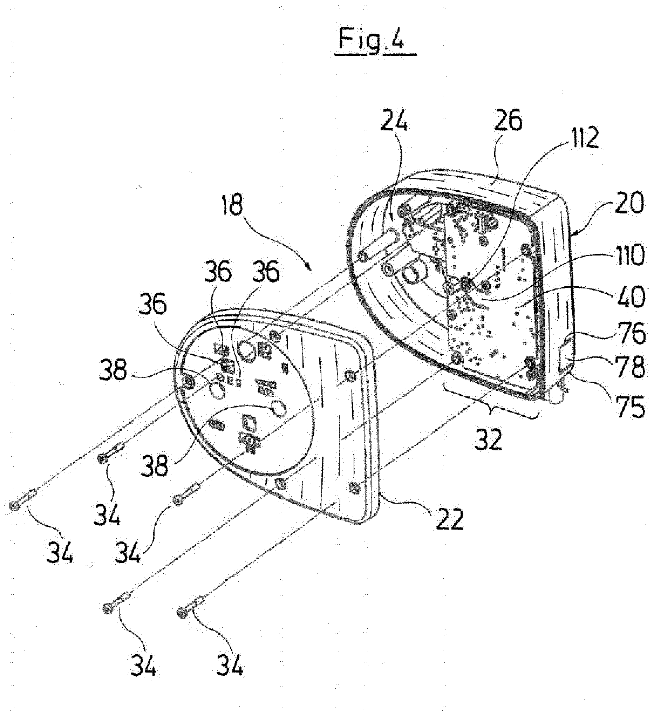

Der Aufbau des Elektronikgehäuses 18 wird nachfolgend näher erläutert. Der Deckel 22 ist, wie in Fig. 4 gezeigt, mittels Schrauben 34 mit dem Unterteil 20 verschraubt. In der Darstellung in Fig. 4 ist die das Bedienfeld 30 bildende Folie vom Deckel abgenommen. Zu erkennen sind lediglich Durchbrechungen 36 in dem Deckel 22, welche den Zugang zu Bedien- und Anzeigeelementen ermöglichen, welche an der Unterseite des Deckels, welche dem Unterteil 2 zugewandt ist, angeordnet sind. Diese Durchbrechungen 36 werden durch die Folie des Bedienfeldes 30 überdeckt und verschlossen. Dabei verdeckt die Folie des Bedienfeldes 30 auch die Löcher 38, durch welche die Schrauben 28 zur Befestigung des Unterteils 20 an dem Statorgehäuse 8 geführt sind.

Im Inneren des Elektronikgehäuses 18, d. h. in dem von der Umfangs- bzw. Außenwandung 26 und dem Boden 24 aufgespannten Innenraum, welcher durch den Deckel 22 verschlossen wird, ist als wesentliches Element eine Leiterplatte 40 angeordnet. An der Leiterplatte 40 sind in bekannter Wiese Leiterbahnen ausgebildet und elektrische und elektronische Bauteile zur Steuerung bzw. Regelung des elektrischen Antriebsmotors in dem Statorgehäuse 8 angebracht. Insbesondere kann auf der Leiterplatte ein Frequenzumrichter ausgebildet sein.

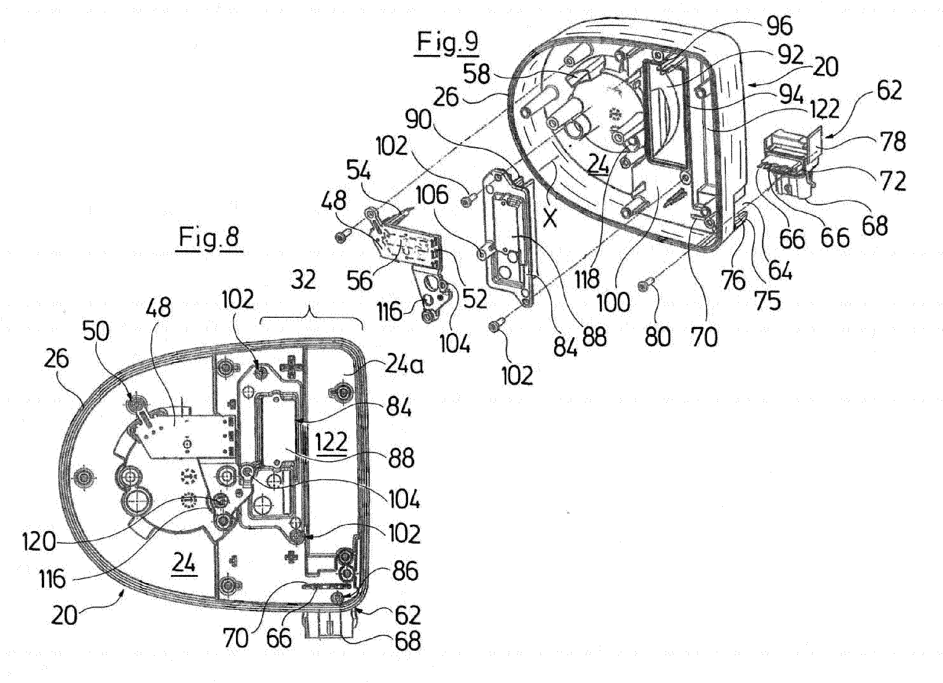

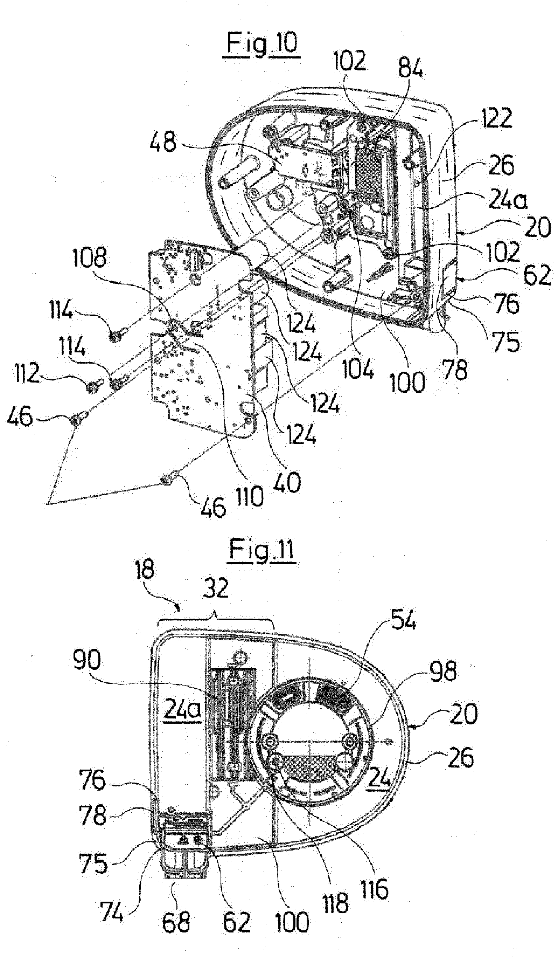

An der Leiterplatte 40 sind zwei Steckkupplungen, eine erste Steckkupplung 42 und eine zweite Steckkupplung 44 ausgebildet. Die erste und zweite Steckkupplung 42 und 44 dienen zur Verbindung mit Anschlusselementen zur Verbindung mit externen Bauteilen, wie es anhand der Figuren 8 und 9 näher erläutert wird. In der Darstellung gemäß Figuren 8 und 9 ist, wie in Fig. 10 gezeigt, die Leiterplatte 40 aus dem Elektronikgehäuse 18 entnommen. Die Leiterplatte 40 ist mit Schrauben 46 in dem Unterteil 20 des Elektronikgehäuses 18 befestigt. Ein erstes Anschlusselement, welches ein Stator-Anschlusselement 48 bildet, dient der elektrischen Verbindung des Stators 10 mit den elektronischen und elektrischen Bauteilen an der Leiterplatte 40. D. h. hier bildet der Stator 10 das externe Bauteil. Das Stator-Anschlusselement 48 ist als separates Bauteil ausgebildet, welches mittels einer Schraube 50 und einer der Schrauben 46, welche die Leiterplatte 40 im Unterteil 20 fixieren, an dem Unterteil 20 des Elektronikgehäuses 8 angeschraubt ist. Das Unterteil 20 ist als reines Kunststoffgehäuse ausgebildet und weist keine fest angeordneten elektrischen Leiter oder Leiterbahnen in seinem Inneren, insbesondere keine in das Kunststoffmaterial eingegossenen Leiterbahnen auf. Solche werden durch Leiterbahnen ersetzt, welche in dem Stator-Anschlusselement 48 ausgebildet sind. Das Stator-Anschlusselement 48 ist als eigenstabiles Formteil aus Kunststoff ausgebildet und weist einen ersten Steckverbinder 52 und einen zweiten Steckverbinder 54 auf. Das Stator-Anschlusselement 48 weist einen flachen Mittelbereich auf, welcher sich parallel zum Boden 24 und zu der Leiterplatte 40 im Inneren des Elektronikgehäuses 18 erstreckt. An entgegengesetzten Enden dieses Mittelbereichs, d. h. in einer Richtung quer zur Längsachse X, sind der erste Steckverbinder 52 und der zweite Steckverbinder 54 voneinander beabstandet angeordnet. Ferner sind der erste Steckverbinder 52 und der zweite Steckverbinder 54 in Richtung der Längsachse X in entgegengesetzte Richtungen gerichtet. D. h. die Steckrichtungen, in welchen die Steckverbinder 52 und 54 kontaktiert werden, sind im Wesentlichen parallel aber entgegengesetzt zueinander gerichtet. In dem hier gezeigten Beispiel sind die Steckverbinder 52 und 54 dreipolig ausgebildet und im Inneren des Stator-Anschlusselementes 48 über Leiterbahnen 56, welche in Fig. 9 gestrichelt dargestellt sind, miteinander verbunden. Die Leiterbahnen 56 sind in das Kunststoffmaterial eingegossen, sodass diese die Leiterbahnen 56 gleichzeitig elektrisch isoliert. Der zweite Steckverbinder 54 erstreckt sich durch eine Öffnung 58 im Boden 24 des Unterteils 20 des Klemmenkastens 18 aus dem Innenraum des Elektronikgehäuses 18 heraus und greift durch eine Öffnung 55 axialseitig in das Innere des Statorgehäuses ein und tritt dort mit Anschlusskontakten bzw. einem Anschlussstecker zur Kontaktierung der Spulen im Stator 10 in Kontakt. Der erste Steckkontakt 52 tritt mit der ersten Steckkupplung 42 an der Leiterplatte 40 elektrisch leitend in Eingriff.

Wie zu erkennen ist, ermöglicht es das Stator-Anschlusselement 48, dass die Leiterplatte 40 nicht oberhalb der Öffnung 58 gelegen sein muss, sondern seitlich in Richtung quer zur Längsachse X zu dieser versetzt in dem Elektronikgehäuse 18 angeordnet werden kann. Dies hat den Vorteil, dass der Bereich, durch welchen sich die Schrauben 28 durch die Führungen 60 in dem Unterteil 20 in dem Elektronikgehäuse 18 erstrecken, frei bleibt, sodass die Befestigung des Elektronikgehäuses 18 an dem Statorgehäuse 8 nicht durch die Leiterplatte 40 in dem Inneren gestört wird. Gegenüber eingegossenen Leitern in dem Elektronikgehäuse hat das Stator-Anschlusselement 48 den Vorteil, dass der Fertigungsvorgang zur Fertigung des Unterteils 20 vereinfacht wird, da keine Leiterbahnen eingegossen werden müssen. Gegenüber einer Kabelverbindung hat das Stator-Anschlusselement 48 den Vorteil, dass es formstabil ist und so definiert in dem Unterteil 20 positioniert wird, sodass ein versehentliches Einklemmen und Beschädigen von Kabeln nicht auftreten kann.

Die zweite Steckkupplung 44 der Leiterplatte 40 ist mit einem zweiten Anschlusselement, welches an Netz-Anschlusselement 62 ausgebildet ist, verbunden. Das Netz-Anschlusselement 62 dient dem Anschluss eines externen Bauteils in Form einer Netz-Anschlussleitung. Während das Stator-Anschlusselement 48 im Inneren des Elektronikgehäuses 18 angeordnet ist und sich lediglich mit seinem zweiten Steckverbinder 54 aus dem Elektronikgehäuse 18 nach außen erstreckt, ist das Netz-Anschlusselement 62 an der Außenseite des Elektronikgehäuses 18 bzw. dessen Unterteils 20 angeordnet. Das Netz-Anschlusselement 62 ist in einer Einbuchtung 64 angeordnet, welche im Boden 24 des Unterteils 20 ausgebildet ist. Die Einbuchtung 64 ist in das Innere des Unterteils 20 gerichtet, d. h. im Bereich der Einbuchtung 64 ist der Boden 24 in axialer Richtung X näher zum Deckel 22 gelegen als der Boden 24 direkt oberhalb des Stators 8. Die Einbuchtung 64 schafft so an der Außenseite des Unterteils 20 einen Aufnahmeraum, in welchem das Netz-Anschlusselement 62 so aufgenommen ist, sodass es nicht über die von der Umfangs- bzw. Außenwandung 26 definierte Gesamt-Außenkontur des Elektronikgehäuses 18 vorsteht. Insbesondere steht das Netz-Anschlusselement 62 nicht in axialer Richtung X über diese Außenkontur vor.

Das Netz-Anschlusselement 62 ist als Formteil aus Kunststoff mit elektrischen Leiterbahnen ausgebildet, welche in das Kunststoffmaterial eingegossen sind. Die elektrischen Leiterbahnen bilden einen ersten Steckverbinder 66, welcher elektrisch leitend mit der zweiten Steckkupplung 44 an der Leiterplatte 40 in Eingriff tritt. In diesem Beispiel sind der erste Steckverbinder66 und die zweite Steckkupplung 44 dreipolig ausgebildet. So sind zwei Netzleiter und ein Erdungsleiter vorhanden. Über die Leiterbahnen im Inneren des Netz-Anschlusselementes 62 ist mit dem ersten Steckverbinder 66 ein zweiter Steckverbinder 68 verbunden, welcher als Steckkupplung zum Anschluss einer hier nicht gezeigten Netz-Anschlussleitung ausgebildet ist. Der erste Steckverbinder 66 erstreckt sich durch eine Öffnung 70 im Boden 24 des Unterteils 20 hindurch in das Innere des Unterteils 20 und damit des Elektronikgehäuses 18 hinein, um dort mit der zweiten Steckkupplung 44 der Leiterplatte 40 in Eingriff zu treten. Den ersten Steckverbinder 66 umgebend ist an dem Netz-Anschlusselement 62 eine Dichtung 72 angeordnet, welche dichtend mit der Außenseite des Bodens 24 zur Anlage kommt und so die Öffnung 70 nach außen abdichtet. Alternativ könnte diese Dichtung 72 auch am Boden 24 des Unterteils 20 ausgebildet sein.

Der zweite Steckverbinder 68 ist gegenüber dem ersten Steckkontakt 66 um 90° abgewinkelt ausgebildet, sodass der zweite Steckverbinder 68 sich zu der Umfangswandung 26 hin erstreckt bzw. durch eine Öffnung bzw. Ausnehmung 74 seitlich nach außen erstreckt. D. h. die Steckrichtungen des ersten Steckverbinders 66 und des zweiten Steckverbinders 68 sind in einem Winkel von 90° zueinander gerichtet. Die Ausnehmung 74 ist in einer Wand 75, welche die Einbuchtung 64 umgibt, gelegen. Diese Wand 75 stellt eine axiale Verlängerung der Außenwandung 26 dar und bildet somit einen Teil der Außenwandung 26, auch wenn sie nicht den Innenraum des Unterteils 20 bzw. des Elektronikgehäuses 18 umgibt. In dieser Wand 75 ist eine zweite Ausnehmung 76 an einer angrenzenden Seitenfläche der Einbuchtung 64 ausgebildet. Die Einbuchtung 64 ist an einer Ecke des Unterteils 20 gelegen, sodass die Ausnehmungen 74 und 76 an zwei sich im Wesentlichen im Winkel von 90° zu einander erstreckenden Wänden bzw. Wandabschnitten gelegen sind. Wenn das Netz-Anschlusselement 62 in der Einbuchtung 64 gelegen ist, liegt eine Außenfläche 78 in der Ausnehmung 76 und verschließt diese so, dass sich die Außenfläche 78 des Netz-Anschlusselementes 62 harmonisch bzw. bündig in die Wand 75 bzw. Außenseite der Umfangswandung 26 einfügt. Das Netz-Anschlusselement 62 ist vorzugsweise einstückig aus Kunststoff ausgebildet. Dabei weist der Kunststoff bevorzugt eine Farbe auf, welche sich von der Farbe der umgebenden Außenwandung 26 und damit des gesamten Unterteils 20 unterscheidet. Dies kann von Vorteil sein, um auf der Außenfläche 78 eine von außen sichtbare Beschriftung, wie beispielsweise einen QR-Code anzubringen, welcher auf der Farbe der Außenwandung 26 schlecht lesbar wäre. So kann auf ein zusätzlich anzubringendes Schriftfeld verzichtet werden. Dieses wird vielmehr durch die Außenfläche 78 bereitgestellt.

In der Einbuchtung 64 wird das Netz-Anschlusselement 62 durch eine Schraube 80, welche sich von innen her durch den Boden 24 des Unterteils 30 erstreckt, fixiert. D. h. das Netz-Anschlusselement 62 kann von der Außenseite her nicht gelöst werden. Somit ist sichergestellt, dass in diesem Bereich das Elektronikgehäuse 18 sicher verschlossen bleibt. Dadurch, dass das Netz-Anschlusselement 62 in der Einbuchtung 64, welche in dem auskragenden Abschnitt 32 an einer Ecke gelegen ist, angeordnet ist, ist der sich zur Seite hin erstreckende zweite Steckverbinder 68 für den Anschluss der Netz-Anschlussleitung 62 gut zugänglich. Dabei ist der zweite Steckverbinder 68 parallel zu einem Saugstutzen 82 gerichtet, welcher sich bei bevorzugter Einbaulage des Pumpenaggregates nach unten erstreckt.

Die Verwendung des Netz-Anschlusselementes hat den Vorteil, dass eine Netz-Anschlussleitung nicht direkt mit der Leiterplatte 40 bzw. den dort angeordneten elektrischen Leitern verbunden werden muss. So ist es zum Anschluss der Netz-Anschlussleitung nicht erforderlich, das Elektronikgehäuse 18 zu öffnen, wodurch eine versehentliche Beschädigung elektrischer bzw. elektronischer Bauteile im Inneren beim Anschluss einer Netz-Anschlussleitung verhindert werden kann. Die Anordnung des Netz-Anschlusselementes 62 an der Außenseite hat darüber hinaus den Vorteil, dass die Öffnung 70 im Boden 24 gut von der Außenseite her abgedichtet werden kann, sodass ein Eindringen von Feuchtigkeit in diesem Bereich verhindert wird. Ferner könnte das Netz-Anschlusselement 62 eine Adapterfunktion übernehmen, bei welcher unterschiedliche zweite Steckverbinder 68 vorgesehen werden, um unterschiedlich geformte Gegenstücke von Netz-Anschlussleitungen hier anschließen zu können. So lässt sich eine Anpassung des Elektronikgehäuses 18 an verschiedene Anschlussleitungen realisieren, ohne die wesentlichen Bauteile wie die Leiterplatte 40 ändern zu müssen. Darüber hinaus kann auch im Bereich des Netzanschlusses auf in dem Unterteil 20 und damit dem Elektronikgehäuse 18 angeordnete Leiterbahnen verzichtet werden.

In dem Unterteil 20 ist ferner ein Wärmeverteiler 84 angeordnet, welcher der Kühlung von Wärme erzeugenden elektronischen Bauelementen an der Leiterplatte 40 dient. Ein solches elektronisches Bauelement 86 kann beispielsweise der Leistungsschalter eines Frequenzumrichters sein. Bei der hier gewählten Anordnung ist das zu kühlende elektronische Bauelement 86 an der dem Boden 24 zugewandten Seite der Leiterplatte 40 gelegen. Das zu kühlende Bauelement 86 ist an der Anlagefläche 88 an dem Wärmeverteiler 84 in wärmeleitende Anlage. Die Anlagefläche 88 erstreckt sich im Wesentlichen parallel zum Boden 24 und zu der Leiterplatte 40, d. h. normal zu der Längs- bzw. Drehachse X. Der Wärmeverteiler 84 ist als Gussbauteil aus Metall, beispielsweise Aluminium ausgebildet und weist an seiner der Anlagefläche 88 abgewandten Axialseite eine Rippenstruktur 90 auf. Der Wärmeverteiler 84 ist im Inneren des Elektronikgehäuses 18 bzw. dessen Unterteils 20 so angeordnet, dass er sich durch eine Ausnehmung bzw. Öffnung 92 im Boden 24 des Elektronikgehäuses 18 derart nach außen erstreckt, dass die Rippenstruktur 90 an der Außenseite des Unterteils 20 gelegen ist, während die Anlagefläche 88 im Inneren gelegen ist. Am Umfangsbereich der Öffnung 92 ist eine Dichtung 94 angeordnet, welche dichtend mit einer korrespondierenden Anlagefläche an dem Wärmeverteiler 84 zur Anlage kommt, sodass der Wärmeverteiler 84 die Öffnung 92 dicht verschließt. Die Dichtung 94 ist zweckmäßigerweise im Zweikomponentenspritzguss direkt an das Unterteil 20 angegossen. So kann die Dichtung 94 gleichzeitig mit weiteren Dichtungen 96 und 98 gegossen werden, welche zur Abdichtung des Deckels 22 sowie des Bodens 24 gegenüber dem Axialende des Statorgehäuses 8 dienen.

In dem Bereich der Öffnung 92 weist der Boden 24 es Unterteils 20 eine Stufe 100 auf. Die Stufe 100 springt in das Innere des Elektronikgehäuses 18 vor. So bildet die Stufe 100 eine nach innen gerichtete Einbuchtung und bewirkt, dass die Öffnung 92 in axialer Richtung näher zu der Leiterplatte 40 gelegen ist als der übrige Bereich des Bodens 24. So kann die Öffnung 92 und damit die Anlagefläche 88 des in die Öffnung eingesetzten Wärmeverteilers 64 in die Nähe der Leiterplatte 40 gebracht werden, um dort mit dem zu kühlenden elektronischen Bauelement 86 direkt in Kontakt gebracht zu werden. Gleichzeitig wird außenseitig der Öffnung 92, d. h. an der dem Statorgehäuse 8 zugewandt Außen- bzw. Unterseite des Unterteils 20 im Bereich der Stufe 100 eine Einbuchtung bzw. ein Aufnahmeraum geschaffen, in welchem der äußere Teil des Wärmeverteilers, nämlich die Rippenstruktur 90 Platz findet. So wird erreicht, dass die Rippenstruktur 90 zwar außerhalb des Elektronikgehäuses 18 liegt jedoch innerhalb der von der Außenwandung 26 definierten Außenkontur des Elektronikgehäuses. Insbesondere steht die Rippenstruktur 90 in axialer Richtung nicht über den an das Statorgehäuse 8 angrenzenden Boden 24 des Elektronikgehäuses 18 vor. Die Rippenstruktur 90 liegt dabei ferner seitlich bzw. radialseitig des Außenumfanges des Statorgehäuses 8 in dem auskragenden Abschnitt 32, sodass sie an der Unterseite des Elektronikgehäuses 18, welche dem Statorgehäuse 8 zugewandt ist, frei von Luft überströmt werden kann. Die Öffnung 92, durch welche sich der Wärmeverteiler 84 mit seiner Rippenstruktur 90 nach außen erstreckt, liegt somit in einem Bereich, welcher dem Statorgehäuse nicht zugewandt ist. Zwar ist der Boden 24 grundsätzlich dem Axialende des Statorgehäuses 8 zugewandt, jedoch ist der Boden in dem auskragenden Abschnitt 32 dem Statorgehäuse 8 nicht zugewandt, sondern einem Bereich radialseitig des Statorgehäuses, d. h. außerhalb des Statorgehäuses, zugewandt. So liegt die Öffnung 92 mit dem Wärmeverteiler 84 in einem dem Statorgehäuse 8 abgewandten Bereich des Elektronikgehäuses 18. Die Kühlung der Rippenstruktur 90 über die Umgebungsluft wird ferner dadurch begünstigt, dass die Rippenstruktur 90 nicht durch Gehäuseteile überdeckt ist. Gleichzeitig wird die Oberseite des Elektronikgehäuses 18, d. h. des Deckels 22, an welcher das Bedienfeld 30 gelegen ist, frei von wärmeabführenden Bauelementen gehalten. So ist der Wärmeverteiler 84 von der Bedienseite her im Wesentlichen nicht sichtbar, sodass er den optischen Eindruck des Elektronikgehäuses 18 nicht stört.

Der Wärmeverteiler 84 ist im Unterteil 20 über zwei Schrauben 102 befestigt. Ferner ist der Wärmeverteiler 88 mit einem Erdungsanschluss einer Erdungsverbindung in dem Stator-Anschlusselement 48 verbunden. Die Erdungsverbindung in dem Stator-Anschlusselement 48 ist ebenfalls als eine eingegossene Leiterbahn 56 ausgebildet, welche an einem ösen- bzw. ringförmigen Erdungsanschluss 104 endet. Der ringförmige Erdungsanschluss 104 kommt bei Montage des Stator-Anschlusselementes 48 über einem Gewindeloch 106 in den Wärmeverteiler 84 zu liegen. Dem Gewindeloch 106 abgewandt, kommt über dem ringförmigen Erdungsanschluss 104 ein Erdungskontakt 108 der Leiterplatte 40 zu liegen. Der Erdungskontakt ist durch eine ein Loch umgebende Leiterbahn gebildet und an einem zungenförmigen Abschnitt 110 gelegen. Der zungenförmige Abschnitt 110 ist in der Leiterplatte durch Schnitte ausgebildet. Durch das Loch des Erdungskontaktes 108 an dem zungenförmigen Abschnitt 110 und durch den Erdungsanschluss 104 erstreckt sich in das Gewindeloch 106 hinein eine Schraube 112. So wird eine Erdungsverbindung zwischen einem an der Leiterplatte 40 ausgebildeten Erdungsleiter gleichzeitig mit dem Erdungsanschluss 104 des Stator-Anschlusselementes 48 und dem Wärmeverteiler 84 hergestellt.

Der an der Leiterplatte 40 ausgebildete Erdungsleiter ist über die Steckkupplung 44 mit einem entsprechenden Erdungskontakt des Steckverbinders 66 des Netz-Anschlusselementes 62 und über dieses mit dem Erdungsleiter einer Netz-Anschlussleitung verbunden.

Die Anordnung des Erdungskontaktes 108 auf dem zungenförmigen Abschnitt 110 hat den Vorteil, dass damit der Erdungskontakt 108 gemeinsam mit dem zungenförmigen Abschnitt 110 gegenüber den übrigen Teilen der Leiterplatte 40 bewegbar ist. So wird verhindert, dass durch die Verbindung des Erdungskontaktes 108 mit dem Wärmeverteiler 84 und dem Stator-Anschlusselement 48 Spannungen in die Leiterplatte 40 eingebracht werden, welche beispielsweise zum Reißen von Leiterbahnen an der Leiterplatte 40 führen könnten.

Ferner ist bei dieser Ausgestaltung der Kontakt zwischen dem Wärmeverteiler 84 und dem Erdungsanschluss 104 an dem Stator-Anschlusselement 48 so dimensioniert, dass neben einer elektrisch leitenden Verbindung auch eine Wärme leitende Verbindung geschaffen wird. Dazu kann die Anlagefläche zwischen Wärmeverteiler 84 und Erdungsanschluss 104 größer ausgebildet sein als für den elektrischen Kontakt erforderlich. Dadurch wird erreicht, dass der Wärmeverteiler den Erdungsanschluss 104 und die sich daran anschließende Leiterbahn im Inneren des Stator-Anschlusselementes 48 erwärmen kann. Dies hat den Vorteil, dass die Leiterbahn und der Erdungsanschluss 104 im inneren des Elektronikgehäuses 18 sich nicht über einen Kontakt mit dem Statorgehäuse 8, wie er nachfolgen beschrieben wird, abkühlen können, was zu einer Kondensation von Feuchtigkeit im Elektronikgehäuse 18 führen könnte. Eine solche Abkühlung wäre beispielsweise zu befürchten, wenn das Pumpenaggregat als Kaltwasserpumpe eingesetzt wird, bei welcher es in einer Abkühlung des Statorgehäuses 8 kommt.

Über zwei Schrauben 114 ist ferner das elektronische Bauelement 86 an der Anlagefläche 88 des Wärmeverteilers 84 fixiert.

Das Stator-Anschlusselement 48 weist an seiner Erdungsverbindung darüber hinaus einen weiteren Erdungsanschluss 116 auf. Dieser kommt über einer Öffnung 118 im Boden 24 des Unterteils 20 zu liegen. Durch die Öffnung 118 hindurch kann sich ein Stift 120, welcher am Axialende des Statorgehäuses 8 angeordnet ist, in das Innere des Elektronikgehäuses 18 hinein erstrecken und in den Erdungsanschluss 116 eingreifen. Der Stift 120 ist an der Axialseite des Statorgehäuses 8 mit diesem elektrisch leitend verbunden und steht in axialer Richtung X vor. In dem Erdungsanschluss 116 sind Federbleche bzw. Federzungen ausgebildet, welche schneidend und elektrisch leitend mit dem Außenumfang des Stiftes 120 in Eingriff treten. So wird eine Erdungsverbindung zwischen dem metallischen Statorgehäuse 8 und der Erdungsverbindung in dem Stator-Anschlusselement 48 hergestellt. Über das Stator-Anschlusselement 48 und dessen zweiten Erdungsanschluss 104 erfolgt die Erdung dann über die Erdungsleitung an der Leiterplatte 40 und wie beschrieben das Netz-Anschlusselement 62.

Die beschriebene Stufe 100 im Boden 24 des Unterteils 20 ist in dem auskragenden Abschnitt 32 angrenzend zu dem Mittelbereich 121 des Unterteils 20, welches an das Axialende des Statorgehäuses 8 angesetzt ist, gelegen und streifenförmig in tangentialer Richtung ausgebildet. D. h. an dem radial äußeren Abschnitt ist ein Bereich 24a des Bodens 24 ausgebildet, welcher über der Stufe 100 wieder in axialer Richtung zu dem Statorgehäuse 8 hin vorspringt und auf demselben axialen Niveau wie der übrige Bereich des Bodens 24 außerhalb des Stufe 10 gelegen ist. So wird an die Stufe 100 angrenzend im Innenraum des Unterteils 20 ein Aufnahmeraum 122 geschaffen, welcher eine größere axiale Bauhöhe hat. D. h. im Bereich des Aufnahmeraums 122 ist die axiale Höhe zwischen der Leiterplatte 40 und dem Boden 24, 24a größer als zwischen der Leiterplatte 40 und der Stufe 100 im Inneren des Elektronikgehäuses 18. So können in den Aufnahmeraum 122 diejenigen elektronischen Bauteile 124 hineinragen, welche eine größere axiale Bauhöhe aufweisen. Durch die Ausbildung der Stufe 100 im Boden 24 des Elektronikgehäuses 18 mit dem seitlich der Stufe gelegenen Aufnahmeraum 122 kann somit zum einen erreicht werden, dass das wärmeabgebende zu kühlende elektronische Bauelement 86 in axialer Richtung in der Nähe der Öffnung 92, durch welche sich der Wärmeverteiler 84 nach außen erstreckt, angeordnet werden kann, gleichzeitig seitlich aber über der Leiterplatte 40 in dem Aufnahmeraum 22 ein größerer axialer Freiraum zur Aufnahme höherer elektronischer Bauelemente 124 gegeben ist. Dies ermöglicht es, alle elektronischen Bauelemente auf einer planen Leiterplatte 40 anzuordnen und darüber hinaus ein flaches, in seiner Gesamtkontur im Wesentlichen scheibenförmiges Elektronikgehäuse 18 auszubilden, über welches keine Bauteile, wie ein Wärmeverteiler 84 in axialer Richtung vorstehen. Die Einbuchtung 64, in welcher das Netz-Anschlusselement 62 gelegen ist, ist wie der Aufnahmeraum 122 an der der Längsachse X abgewandten Seite der Stufe 100 gelegen. Die Einbuchtung 64 ist dabei mit dem durch die Stufe 100 an der Außenseite des Bodens 24 gebildeten Freiraum, in welchem die Rippenstruktur 90 gelegen ist, verbunden.

### Bezugszeichenliste

- 2: Pumpengehäuse
- 4: Laufrad
- 6: Isolationselement
- 8: Statorgehäuse
- 10: Stator
- 12: Rotor
- 14: Rotorwelle
- 16: Spaltrohr
- 18: Elektronikgehäuse
- 20: Unterteil
- 22: Deckel
- 24, 24a: Boden
- 26: Außenwandung
- 28: Schrauben
- 30: Bedienfeld
- 32: auskragender Abschnitt
- 34: Schrauben
- 36: Durchbrechungen
- 38: Löcher
- 40: Leiterplatte
- 42: erste Steckkupplung
- 44: zweite Steckkupplung
- 46: Schrauben
- 48: Stator-Anschlusselement
- 50: Schraube
- 52: erster Steckverbinder
- 54: zweiter Steckverbinder
- 55: Öffnung
- 56: Leiterbahnen
- 58: Öffnung
- 60: Führungen
- 62: Netz-Anschlusselement
- 64: Einbuchtung
- 66: erster Steckverbinder
- 68: zweiter Steckverbinder
- 70: Öffnung
- 72: Dichtung
- 74, 76: Ausnehmungen
- 75: Wand
- 78: Außenfläche
- 80: Schraube
- 82: Saugstutzen
- 84: Wärmeverteiler
- 86: elektronisches Bauelement
- 88: Anlagefläche
- 90: Rippenstruktur
- 92: Öffnung
- 94: Dichtung
- 96, 98: Dichtung
- 100: Stufe
- 102: Schrauben
- 104: Erdungsanschluss
- 106: Gewindeloch
- 108: Erdungskontakt
- 110: Abschnitt
- 112: Schraube
- 114: Schrauben
- 116: Erdungsanschluss
- 118: Öffnung
- 120: Stift
- 121: Mittelbereich
- 122: Aufnahmeraum
- 124: elektronische Bauteile

- X: Längsachse

## Patentansprüche

1. Pumpenaggregat mit einem in einem Statorgehäuse (8) angeordneten elektrischen Antriebsmotor und einem mit dem Statorgehäuse (8) verbundenen Elektronikgehäuse (18), in welchem zumindest eine Leiterplatte (40) mit elektronischen Bauelementen angeordnet ist,
wobei
an oder in dem Elektronikgehäuse (18) zumindest ein separates, als Kunststoffformteil ausgebildetes Stator-Anschlusselement (48) angeordnet ist, das als von dem Elektronikgehäuse unabhängiges Bauteil ausgebildet ist und das über eine erste elektrische Verbindung (52) mit der Leiterplatte (40) verbunden ist, sowie eine zweite elektrische Verbindung in Form eines zweiten elektrischen Steckverbinders (54) aufweist, welcher mit der ersten elektrischen Verbindung (52) über Leiterbahnen (56) verbunden ist und einem elektrischen Anschluss eines außerhalb des Elektronikgehäuses (18) gelegenen Bauteiles dient, indem der zweite Steckverbinder mit einem Anschlussstecker eines Stators (12) des elektrischen Antriebsmotors verbunden ist, **dadurch gekennzeichnet, dass** das Stator-Anschlusselement (48) eine Erdungsverbindung aufweist, welche mit einem ersten Erdungsanschluss (116) versehen ist, welcher mit einem Erdungskontakt (120) an dem Statorgehäuse (12) verbunden ist.

2. Pumpenaggregat nach Anspruch 1, **dadurch gekennzeichnet, dass** die erste elektrische Verbindung einen ersten elektrischen Steckverbinder (52) aufweist, welcher mit einer korrespondierenden elektrischen Steckkupplung (42) an der Leiterplatte (40) verbunden ist, und mit dem zweiten Steckverbinder (54) der zweiten elektrischen Verbindung über Leiterbahnen (56) verbunden ist.

3. Pumpenaggregat nach Anspruch 2, **dadurch gekennzeichnet, dass** der erste elektrische Steckverbinder (52) entgegengesetzt zu dem zweiten elektrischen Steckverbinder (54) gerichtet ist.

4. Pumpenaggregat nach Anspruch 2 oder 3, **dadurch gekennzeichnet, dass** der erste Steckverbinder (52) und der zweite Steckverbinder (54) in einer Richtung quer zu ihren Steckrichtungen versetzt zueinander angeordnet sind, während die Steckrichtungen vorzugsweise parallel zueinander gerichtet sind.

5. Pumpenaggregat nach einem der vorangehenden Ansprüche, **dadurch gekennzeichnet, dass** das Anschlusselement (48) einen Abschnitt aufweist, welcher sich in einer Ebene parallel zu der Leiterplatte (40) erstreckt, wobei sich der elektrische Steckverbinder (54) der zweiten elektrischen Verbindung vorzugsweise quer zu dieser Ebene erstreckt.

6. Pumpenaggregat nach einem der vorangehenden Ansprüche, **dadurch gekennzeichnet, dass** das Anschlusselement (48; 62) in dem Elektronikgehäuse mittels einer Schraub- oder Rastverbindung fixiert ist.

7. Pumpenaggregat nach einem der vorangehenden Ansprüche, **dadurch gekennzeichnet, dass** die Leiterbahnen (56) in den Kunststoff, aus welchem das Anschlusselement (48; 62) geformt ist, eingegossen sind.

8. Pumpenaggregat nach einem der vorangehenden Ansprüche, **dadurch gekennzeichnet, dass** sich der zweite elektrische Steckverbinder (56) durch eine Öffnung (58) in einer Wandung, vorzugsweise im Boden (24) des Elektronikgehäuses (18) aus diesem heraus zu dem Stator (12) erstreckt.

9. Pumpenaggregat nach einem der vorangehenden Ansprüche, **dadurch gekennzeichnet, dass** der erste Erdungsanschluss (116) als eine elektrisch leitfähige Aufnahme ausgebildet ist, in welche ein an dem Statorgehäuse (12) angeordneter elektrisch leitfähiger Stift (120) eingreift.

10. Pumpenaggregat nach einem der vorangehenden Ansprüche, **dadurch gekennzeichnet, dass** die Erdungsverbindung mit einem zweiten Erdungsanschluss (104) versehen ist, welcher elektrisch leitend mit einem Erdungskontakt (108) an der Leiterplatte (40) verbunden ist.

11. Pumpenaggregat nach einem der vorangehenden Ansprüche, **dadurch gekennzeichnet, dass** die Erdungsverbindung einen Erdungsanschluss (104) aufweist, welcher mit zumindest einem Wärmeverteiler (84) elektrisch leitend und vorzugsweise wärmeleitend verbunden ist.

12. Pumpenaggregat nach den Ansprüchen 10 und 11, **dadurch gekennzeichnet, dass** der zweite Erdungsanschluss (104) der Erdungsverbindung sowohl mit dem Erdungskontakt (108) an der Leiterplatte (40) als auch mit dem Wärmeverteiler (84), vorzugsweise mittels einer Schraube (112), elektrisch leitend verbunden ist.

13. Pumpenaggregat nach einem der Ansprüche 10 bis 12, **dadurch gekennzeichnet, dass** der zweite Erdungsanschluss als metallische Öse (104) an einer, vorzugsweise in das Stator-Anschlusselement (48) eingegossenen, Leiterbahn (56) ausgebildet ist.

14. Pumpenaggregat nach einem der Ansprüche 10 bis 13, **dadurch gekennzeichnet, dass** der Erdungskontakt (108) an der Leiterplatte (40) auf einem zungenförmigen Abschnitt (110) der Leiterplatte (40) ausgebildet ist.

15. Pumpenaggregat nach einem der vorangehenden Ansprüche, **dadurch gekennzeichnet, dass** an oder in dem Elektronikgehäuse (18) zumindest ein separates, als Kunststoffformteil ausgebildetes Anschlusselement (62) angeordnet ist, welches als ein Netz-Anschlusselement (62) ausgebildet ist, welches außerhalb des Innenraumes des Elektronikgehäuses (18) angeordnet ist und über eine erste elektrische Verbindung (66) mit der Leiterplatte (40) verbunden ist, sowie eine zweite elektrische Verbindung in Form eines elektrischen Steckverbinders (68) aufweist, welcher mit der ersten elektrischen Verbindung (66) über Leiterbahnen verbunden ist und zum Anschluss einer Netzanschlussleitung vorgesehen ist.

16. Pumpenaggregat nach Anspruch 15, **dadurch gekennzeichnet, dass** das Netz-Anschlusselement (62) einen ersten elektrischen Steckverbinder (66), welcher mit einer korrespondierenden Steckkupplung (44) an der Leiterplatte (40) in Eingriff ist, sowie einen zweiten elektrischen Steckverbinder (68) aufweist, welcher mit dem ersten elektrischen Steckverbinder (66) über Leiterbahnen in dem Netz-Anschlusselement (62) verbunden ist und zum Anschluss einer Netzanschlussleitung vorgesehen ist.

17. Pumpenaggregat nach Anspruch 15 oder 16, **dadurch gekennzeichnet, dass** das Netz-Anschlusselement (62) eine Erdungsverbindung von dem zweiten Steckverbinder (68) zu einem Erdungskontakt an der Leiterplatte (40), welcher vorzugsweise Teil der Steckkupplung (44) ist, aufweist.

18. Pumpenaggregat nach Anspruch 16 oder 17, **dadurch gekennzeichnet, dass** eine Steckrichtung, in welcher der erste elektrische Steckverbinder (52) an dem Stator-Anschlusselement (48) mit der korrespondierenden elektrischen Steckkupplung (42) an der Leiterplatte (40) verbunden ist, sowie eine Steckrichtung, in welcher der erste elektrische Steckverbinder (66) an dem Netz-Anschlusselement (62) mit der Steckkupplung (44) an der Leiterplatte (40) verbunden ist, zueinander parallel sind.

## Claims

1. A pump assembly with an electrical drive motor which is arranged in a stator housing (8) and with an electronics housing (18) which is connected to the stator housing (8), in which at least one circuit board (40) with electronic components is arranged,
wherein
at least one separate stator connection element (48; 62) which is designed as a plastic moulded part is arranged on or in the electronics housing (18), said stator connection element being designed as a component which is independent of the electronics housing and which connected to the circuit board (40) via a first electrical connection (52) as well as comprising a second electrical connection in the form of a second electrical plug-in connector (54) which is connected to the first electric connection (52) via strip conductors (56) and which serves for an electrical connection of a component which is situated outside the electronics housing (18) by way of the second plug-in connector being connected to a connection plug of a stator (12) of the electrical drive motor, **characterised in that** the stator connection element (48) comprises an earth connection which is provided with a first earth terminal (116) which is connected to an earth contact (120) on the stator housing (12).

2. A pump assembly according to claim 1, **characterised in that** the first electrical connection comprises a first electrical plug-in connector (52) which is connected to a corresponding electrical plug-in coupling (42) on the circuit board (40) and is connected to the second plug-in connector (54) of the second electrical connection via strip conductors (56).

3. A pump assembly according to claim 2, **characterised in that** the first electric plug-in connector (52) is directed opposite to the second electric plug-in connector (54).

4. A pump assembly according to claim 2 or 3, **characterised in that** the first plug-in connector (52) and the second plug-in connector (54) are arranged offset to one another in a direction transverse to their plug-in directions, whilst the plug-in directions are preferably directed parallel to one another.

5. A pump assembly according to one of the preceding claims, **characterised in that** the stator connection element (48) has a section which extends in a plane parallel to the circuit board (40), wherein the electric plug-in connector (54) of the second electrical connection extends preferably transversely to this plane.

6. A pump assembly according to one of the preceding claims, **characterised in that** the stator connection element (48) is fixed in the electronics housing by way of a screw connection or latch-in connection.

7. A pump assembly according to one of the preceding claims, **characterised in that** the strip conductors (56) are moulded into the plastic, from which the stator connection element (48) is moulded.

8. A pump assembly according to one of the preceding claims, **characterised in that** the second electrical plug-in connector (56) extends through an opening (58) in a wall, preferably in the base (24) of the electronics housing (18), out of this, to the stator (12).

9. A pump assembly according to one of the preceding claims, **characterised in that** the first earth terminal (116) is designed as an electrically conductive receiver, into which an electrically conductive pin (120) which is arranged on the stator housing (12) engages.

10. A pump assembly according to one of the preceding claims, **characterised in that** the earth connection is provided with a second earth terminal (104) which is electrically conductively connected to an earth contact (108) on the circuit board (40).

11. A pump assembly according to to one of the preceding claims, **characterised in that** the earth connection comprises an earth terminal (104) which is connected in an electrically conductive and preferably thermally conductive manner to at least one heat distributor (84).

12. A pump assembly according to claims 10 and 11, **characterised in that** the second earth terminal (104) of the earth connection is electrically conductively connected to the earth contact (108) on the circuit board (40) as well as to the heat distributor (84), preferably by way of a screw (112).

13. A pump assembly according to one of the claims 10 to 12, **characterised in that** the second earth terminal is designed as a metallic eyelet (104) on a strip conductor (56) which is preferably moulded into the stator connection element (48).

14. A pump assembly according to one of the claims 10 to 13, **characterised in that** the earth contact (108) on the circuit board (40) is formed on a tongue-like section (110) of the circuit board (40).

15. A pump assembly according to one of the preceding claims, **characterised in that** at least one separate connection element (62) which is designed as a plastic moulded part and which is designed as a mains connection element (62) which is arranged outside the interior of the electronics housing (18) and is connected to the circuit board (40) via a first electrical connection (66), said connection element further comprising a second electrical connection in the form of an electric plug-in connector (68) which is connected to the first electric connection (66) via strip conductors and is envisaged for connection of a mains connection lead.

16. A pump assembly according claim 15, **characterised in that** the mains connection element (62) comprises a first electric plug-in connector (66) which is engaged with a corresponding plug-in coupling (44) on the circuit board (40), as well as a second electric plug-in connector (68) which is connected to the first electric plug-in connector (66) via strip conductors in the mains connection element (62) and is envisaged for connection of a mains connection lead.

17. A pump assembly according to claim 15 or 16, **characterised in that** the mains connection element (62) comprises an earth connection from the second plug-in connector (68) to an earth contact on the circuit board (40), said earth contact preferably being a part of the plug-in coupling (44).

18. A pump assembly according to claim 16 or 17, **characterised in that** a plug-in direction, in which the first electrical plug-in connector (52) on the stator connection element (48) is connected to the corresponding electric plug-in coupling (42) on the circuit board (40), and as well as a plug-in direction, in which the first electric plug-in connector (66) on the mains connection element (62) is connected to the plug-in coupling (44) on the circuit board (40), are parallel to one another.

## Revendications

1. Groupe motopompe pourvu d'un moteur d'entraînement électrique disposé dans un carter de stator (8) et d'un boîtier électronique (18) relié au carter de stator (8), dans lequel est disposée au moins une carte de circuits imprimés (40) dotée de composants électroniques,
dans lequel au moins un élément de raccordement de stator (48) distinct, conçu sous forme de pièce moulée en matière plastique est disposé sur ou dans le boîtier électronique (18), l'élément étant réalisé en tant que composant indépendant du boîtier électronique et étant relié à la carte de circuits imprimés (40) par l'intermédiaire d'une première connexion électrique (52), et comportant une seconde connexion électrique sous la forme d'un second connecteur électrique (54) qui est relié à la première connexion électrique (52) par des pistes conductrices (56) et sert au raccordement électrique d'un composant situé à l'extérieur du boîtier électronique (18), le second connecteur étant relié à une fiche de raccordement d'un stator (12) du moteur d'entraînement électrique, **caractérisé en ce que** l'élément de raccordement de stator (48) présente une connexion de mise à la terre qui est pourvue d'une première prise de terre (116), qui est reliée à un contact de mise à la terre (120) sur le carter de stator (12).

2. Groupe motopompe selon la revendication 1, **caractérisé en ce que** la première connexion électrique présente un premier connecteur électrique (52) qui est relié à une connexion à fiches électrique (42) correspondante sur la carte de circuits imprimés (40) et est relié au second connecteur (54) de la seconde connexion électrique par des pistes conductrices (56).

3. Groupe motopompe selon la revendication 2, **caractérisé en ce que** le premier connecteur électrique (52) est orienté à l'opposé du second connecteur électrique (54).

4. Groupe motopompe selon la revendication 2 ou 3, **caractérisé en ce que** le premier connecteur (52) et le second connecteur (54) sont disposés de manière mutuellement décalée dans une direction transversale à leurs directions d'enfichage tandis que les directions d'enfichage sont orientées de préférence de manière parallèle entre elles.

5. Groupe motopompe selon l'une des revendications précédentes, **caractérisé en ce que** l'élément de raccordement de stator (48) présente une portion qui s'étend dans un plan parallèle à la carte de circuits imprimés (40), le connecteur électrique (54) de la seconde connexion électrique s'étendant de préférence transversalement à ce plan.

6. Groupe motopompe selon l'une des revendications précédentes, **caractérisé en ce que** l'élément de raccordement de stator (48) est fixé dans le boîtier électronique au moyen d'un raccord vissé ou d'une liaison par encliquetage.

7. Groupe motopompe selon l'une des revendications précédentes, **caractérisé en ce que** les pistes conductrices (56) sont coulées dans la matière plastique à partir de laquelle a été formé l'élément de raccordement de stator (48).

8. Groupe motopompe selon l'une des revendications précédentes, **caractérisé en ce que** le second connecteur électrique (56) s'étend à travers une ouverture (58) pratiquée dans une paroi, de préférence dans le fond (24) du boîtier électronique (18), hors de celui-ci jusqu'au stator (12).

9. Groupe motopompe selon l'une des revendications précédentes, **caractérisé en ce que** la première prise de terre (116) est réalisée sous la forme d'un logement électriquement conducteur dans lequel s'engage une broche (120) électriquement conductrice disposée sur le carter de stator (12).

10. Groupe motopompe selon l'une des revendications précédentes, **caractérisé en ce que** la connexion de mise à la terre est pourvue d'une seconde prise de terre (104) qui est reliée de manière électriquement conductrice à un contact de mise à la terre (108) sur la carte de circuits imprimés (40).

11. Groupe motopompe selon l'une des revendications précédentes, **caractérisé en ce que** la connexion de mise à la terre présente une prise de terre (104) qui est reliée à au moins un dissipateur de chaleur (84) de manière électroconductrice, et de préférence thermoconductrice.

12. Groupe motopompe selon les revendications 10 et 11, **caractérisé en ce que** la seconde prise de terre (104) de la connexion de mise à la terre est reliée de manière électro-conductrice aussi bien au contact de mise à la terre (108) sur la carte de circuits imprimés(40) qu'avec le dissipateur de chaleur (84), de préférence au moyen d'une vis (112).

13. Groupe motopompe selon l'une des revendications 10 à 12, **caractérisé en ce que** la seconde prise de terre est réalisée sous la forme d'un oeillet métallique (104) sur une piste conductrice (56) coulée de préférence dans l'élément de raccordement de stator (48).

14. Groupe motopompe selon l'une des revendications 10 à 13, **caractérisé en ce que** le contact de mise à la terre (108) sur la carte de circuits imprimés (40) est formé sur une portion en forme de languette (110) de la carte de circuits imprimés (40).

15. Groupe motopompe selon l'une des revendications précédentes, **caractérisé en ce qu'**est disposé sur ou dans le boîtier électronique (18) au moins un élément de raccordement (62) distinct conçu sous forme de pièce moulée en matière plastique, qui est réalisé sous la forme d'un élément de raccordement secteur (62), lequel est disposé hors de l'espace intérieur du boîtier électronique (18) et est relié à la carte de circuits imprimés (40) par l'intermédiaire d'une première connexion électrique (66), et qui présente une seconde connexion électrique sous la forme d'un connecteur électrique (68) qui est relié à la première connexion électrique (66) par l'intermédiaire de pistes conductrices et est prévu pour un raccordement à un conduit d'alimentation secteur.

16. Groupe motopompe selon la revendication 15, **caractérisé en ce que** l'élément de raccordement secteur (62) présente un premier connecteur électrique (66) qui est en prise avec une connexion à fiches électrique (44) correspondante sur la carte de circuits imprimés (40), ainsi qu'un second connecteur électrique (68) qui est relié au premier connecteur électrique (66) par l'intermédiaire de pistes conductrices dans l'élément de raccordement secteur (62) et est prévu pour un raccordement à un conduit d'alimentation secteur.

17. Groupe motopompe selon la revendication 15 ou 16, **caractérisé en ce que** l'élément de raccordement secteur (62) présente une connexion de mise à la terre du second connecteur (68) à un contact de mise à la terre sur la carte de circuits imprimés (40), lequel fait de préférence partie de la connexion à fiches électrique (44).

18. Groupe motopompe selon la revendication 16 ou 17, **caractérisé en ce qu'**une direction d'enfichage, dans laquelle le premier connecteur électrique (52) sur l'élément de raccordement de stator (48) est relié à la connexion à fiches électrique (42) correspondante sur la carte de circuits imprimés (40), ainsi qu'une direction d'enfichage dans laquelle le premier connecteur électrique (66) sur l'élément de raccordement secteur (62) est relié à la connexion à fiches électrique (44) sur la carte de circuits imprimés (40), sont parallèles entre eux.
